# FASCICULE DE BREVET EUROPEEN

(11) **EP 3 077 923 B1**
(45) Date de publication et mention de la délivrance du brevet: **09.01.2019**
(21) Numéro de dépôt: 14808623.4
(22) Date de dépôt: 05.12.2014
(51) Int. Cl.: G06F 17/30

(54) **TERMINAL D'AFFICHAGE D'ÉLÉMENTS D'UNE BASE DE DONNÉES HIÉRARCHISÉES À N NIVEAUX**
ENDGERÄT ZUR ANZEIGE VON ELEMENTEN AUF EINER IN N-EBENEN HIERARCHISIERTEN DATENBANK
TERMINAL FOR DISPLAYING ELEMENTS OF A DATABASE HIERARCHIZED IN N LEVELS

(30) Priorité: 05.12.2013 FR 1302837
(43) Date de publication de la demande: 12.10.2016
(73) Titulaire: Thales, 92200 Neuilly Sur Seine (FR)
(72) Inventeur: CHORIN, Patrick, 29238 Brest Cedex 3 (FR); DURIEUX, Yves, 29238 Brest Cedex 3 (FR); GRISVARD, Olivier, 29238 Brest Cedex 3 (FR); LE PORS, Eric, 29238 Brest Cedex 3 (FR)
(74) Mandataire: Lavoix
(86) Numéro de dépôt international: PCT/EP2014/076745
(87) Numéro de publication internationale: WO 2015/082692

(56) Documents cités:
- US-A1- 2012 229 466
- JAMES ABELLO ET AL: "ASK-GraphView: A Large Scale Graph Visualization System", IEEE TRANSACTIONS ON VISUALIZATION AND COMPUTER GRAPHICS, IEEE SERVICE CENTER, LOS ALAMITOS, CA, US, vol. 12, no. 5, 1 septembre 2006 (2006-09-01), pages 669-676, XP011150867, ISSN: 1077-2626, DOI: 10.1109/TVCG.2006.120
- ARCHAMBAULT D ET AL: "GrouseFlocks: Steerable Exploration of Graph Hierarchy Space", IEEE TRANSACTIONS ON VISUALIZATION AND COMPUTER GRAPHICS, IEEE SERVICE CENTER, LOS ALAMITOS, CA, US, vol. 14, no. 4, 1 juillet 2008 (2008-07-01), pages 900-913, XP011344500, ISSN: 1077-2626, DOI: 10.1109/TVCG.2008.34

## Description

La présente invention concerne un terminal d'affichage d'éléments d'une base de données hiérarchisées à n niveaux.

L'invention se situe dans le domaine de l'affichage des éléments d'une base de données relationnelle, comprenant des éléments liés selon plusieurs niveaux de hiérarchie.

L'invention trouve notamment une application dans le domaine de l'affichage d'éléments techniques d'une base de données tactiques utilisée dans un système de mission.

Un système de mission permet à un ou plusieurs opérateurs de mener à bien une mission donnée, par exemple une mission de surveillance d'environnement, de reconnaissance ou de combat, à l'aide d'un système d'analyse de situation comportant divers capteurs (e.g. radars, caméras, détecteurs) et/ou effecteurs (e.g. brouilleurs, leurres). Le système de mission agrège de nombreuses informations fournies par les divers systèmes capteurs, pour fournir une vision synthétique à l'opérateur, via une interface homme-machine (IHM). En outre, le système de mission est apte à présenter à l'opérateur des informations de divers types, par exemple des informations relatives aux capteurs/effecteurs de bord ou des informations relatives à des cibles ou objets surveillés, à partir de bases de données de connaissances.

De tels systèmes de mission sont notamment destinés à être embarqués sur un porteur (e.g. aéronef, véhicule terrestre, navire).

L'arborescence des informations ou éléments techniques à afficher est complexe, les objets présentant entre eux des relations de plusieurs types, à savoir des relations hiérarchiques, et des relations d'association sur un même niveau de hiérarchie. Par exemple, des informations relatives aux capteurs, aux signaux captés, aux paramètres associés aux divers capteurs et aux signaux captés sont présentées, les signaux captés étant chacun lié à un capteur donné, et pouvant présenter des liens entre eux à un même niveau de hiérarchie.

D'une manière générale, on note que les éléments à présenter sont nombreux, complexes, présentent des relations de plusieurs types, et plusieurs éléments sont associables à un même niveau de hiérarchie.

En particulier dans le domaine de l'utilisation de systèmes de mission, un opérateur a besoin d'appréhender facilement et très rapidement un ensemble d'informations, afin de pouvoir réagir rapidement.

De manière classique, on présente les éléments d'une base de données à plusieurs niveaux de hiérarchie sous la forme d'une arborescence de type liste d'éléments sous forme tabulaire avec indentations pour signifier plusieurs niveaux de hiérarchie, similairement aux explorateurs de fichiers d'un système d'exploitation.

Une telle représentation, dite arborescente, ne permet cependant de représenter qu'un seul type de relation entre éléments, à savoir une relation hiérarchique, sans permettre la représentation de liens entre les éléments d'un même niveau de hiérarchie. De plus, lorsque de nombreux éléments sont présents, un opérateur risque de perdre du temps pour rechercher des éléments d'intérêt à divers niveaux de profondeur dans l'arborescence.

L'article « ASK-GraphView : A Large Scale Graph Visualization System » de Abello et al, publié dans IEEE Transactions on Visualization and Computer Graphics, vol. 12, 2006, décrit une méthode de traitement et de visualisation de graphes de très grande taille, par l'introduction de sous-graphes ou « clusters » en anglais.

Il existe donc un besoin d'améliorer l'affichage d'éléments de bases de données relationnelles, dont les éléments présentent également des relations plus complexes qu'une arborescence où chaque élément n'a qu'un seul parent, notamment dans ce contexte d'exploitation dans un système de mission.

A cet effet, l'invention propose, selon un premier aspect, un terminal d'affichage d'éléments d'une base de données hiérarchisées à n niveaux, au moins certains des éléments de la base de données appartenant à un même niveau de hiérarchie ayant une relation d'association, le terminal comportant au moins deux parties d'affichage. Le terminal est tel qu'une première partie est destinée à afficher une représentation par niveaux de hiérarchie des éléments de la base de données et une deuxième partie est destinée à afficher un objet graphique d'interaction, présentant n zones d'activation/désactivation d'affichage, chaque zone d'activation/désactivation d'affichage correspondant à un niveau de hiérarchie dans la première partie d'affichage, le terminal comportant un module de filtrage de niveaux et un module de ré-agencement d'affichage, lesdites zones d'activation/désactivation d'affichage étant accessibles à un opérateur du terminal pour commander les modules de filtrage de niveaux et de ré-agencement d'affichage, de manière à obtenir une représentation d'affichage choisie de la base de données. Le terminal comporte en outre des moyens de sélection d'un niveau central d'affichage, l'affichage du niveau central d'affichage sélectionné ne pouvant pas être désactivé via lesdites zones d'activation/désactivation.

Avantageusement, grâce à l'objet graphique d'interaction, présentant n zones d'activation/désactivation d'affichage, chaque zone correspondant à un niveau de hiérarchie dans la première partie d'affichage, l'opérateur a la possibilité de gérer dynamiquement les niveaux de l'arborescence visualisés, et donc de filtrer de manière rapide et facile les niveaux à afficher, tout en ayant une garantie d'affichage d'un niveau central d'affichage.

Le terminal d'affichage selon l'invention peut également présenter une ou plusieurs des caractéristiques ci-dessous, prises indépendamment ou en combinaison :
- l'objet graphique d'interaction comporte un indicateur de niveaux affichés, accessible à l'opérateur pour modifier le nombre de niveaux affichés autour du niveau central d'affichage ;
- le terminal comporte des moyens de sélection d'un élément central d'affichage, et le niveau de hiérarchie auquel appartient l'élément central d'affichage est désigné comme niveau central d'affichage ;
- le terminal comporte en outre une troisième partie d'affichage apte à afficher des attributs relatifs audit élément central d'affichage ;
- le module de ré-agencement d'affichage est apte à mettre à jour les éléments affichés et l'affichage de l'objet graphique d'interaction en fonction du niveau central d'affichage sélectionné par l'opérateur ;
- les éléments de la base de données sont représentés sous forme de graphe hiérarchique, des éléments d'un même niveau de hiérarchie étant représentés sur un même niveau dudit graphe hiérarchique, des éléments d'un niveau de hiérarchie courant étant liés à un ou plusieurs éléments du niveau supérieur au niveau courant et à un ou plusieurs éléments du niveau inférieur au niveau courant ;
- au moins certaines zones d'activation/désactivation d'affichage de l'objet graphique d'interaction sont associées à des sous-niveaux de hiérarchie correspondants.

Selon un deuxième aspect, l'invention propose un procédé d'affichage d'éléments d'une base de données hiérarchisées à n niveaux, au moins certains des éléments de la base de données appartenant à un même niveau de hiérarchie ayant une relation d'association, mis en oeuvre par un terminal comportant au moins deux parties d'affichage, une première partie étant destinée à afficher une représentation par niveaux de hiérarchie des éléments de la base de données et une deuxième partie étant destinée à afficher un objet graphique d'interaction, présentant n zones d'activation/désactivation d'affichage, chaque zone correspondant à un niveau de hiérarchie dans la première partie (30) d'affichage. Le procédé comporte des étapes de :
- réception d'une commande de sélection d'un niveau central d'affichage,
- réception d'une commande opérateur de sélection d'une zone d'activation/désactivation,
- vérification (82) de l'association de la zone d'activation/désactivation sélectionnée au niveau central d'affichage,
- en cas de vérification négative, obtention d'un niveau de hiérarchie p associé à ladite zone d'activation/désactivation sélectionnée,
- modification de la représentation par niveaux de hiérarchie de la base de données par filtrage ou ajout du niveau de hiérarchie p associé à ladite zone d'activation/désactivation sélectionnée,

Selon une caractéristique, le procédé d'affichage comporte, après l'étape d'obtention d'un niveau de hiérarchie, les étapes de :
- vérification d'un état d'activation d'affichage associé à ladite zone d'activation/désactivation sélectionnée,
- en cas d'état activé, filtrage des éléments affichés de niveau de hiérarchie p et calcul des liens entre les éléments d'un niveau parent du niveau de hiérarchie p et les éléments d'un niveau enfant du niveau de hiérarchie p,
- en cas d'état désactivé, sélection d'éléments du niveau de hiérarchie p à afficher.

Selon une caractéristique particulière, le procédé d'affichage comporte en outre une étape de mise à jour de l'affichage des zones d'activation/désactivation de l'objet graphique d'interaction.

Selon une caractéristique, le procédé d'affichage comporte en outre des étapes, mises en oeuvre suite à la réception d'une commande de sélection de niveau central d'affichage, de :
- mise à jour de la représentation par niveaux de hiérarchie des éléments de la base de données, et
- mise à jour d'un indicateur de niveaux affichés associé à l'objet graphique d'interaction en fonction du niveau central d'affichage sélectionné.

Selon une autre caractéristique particulière, le procédé comporte en outre des étapes de :
- réception d'une commande de sélection d'un élément central d'affichage,
- sélection du niveau de hiérarchie auquel appartient l'élément central d'affichage sélectionné en tant que niveau central d'affichage,
- mise à jour de la représentation par niveaux de hiérarchie des éléments de la base de données en fonction du niveau central d'affichage sélectionné, et
- mise à jour d'un indicateur de niveaux affichés associé à l'objet graphique d'interaction en fonction du niveau central d'affichage sélectionné.

D'autres caractéristiques et avantages de l'invention ressortiront de la description qui en est donnée ci-dessous, à titre indicatif et nullement limitatif, en référence aux figures annexées, parmi lesquelles :
- la figure 1 est une représentation en blocs fonctionnels d'un terminal d'affichage selon un mode de réalisation de l'invention ;
- la figure 2 illustre schématiquement un premier état d'affichage d'éléments d'une base de données relationnelle selon un mode de réalisation de l'invention ;
- la figure 3 illustre schématiquement un deuxième état d'affichage des éléments de la figure 2 suite à une commande opérateur ;
- la figure 4 illustre schématiquement un troisième état d'affichage des éléments de la figure 2 suite à une commande opérateur ;
- la figure 5 illustre schématiquement un quatrième état d'affichage des éléments de la figure 2 suite à une commande opérateur ;
- la figure 6 illustre les principales étapes d'un procédé d'affichage d'éléments d'une base de données hiérarchisées à n niveaux selon un mode de réalisation de l'invention ;
- la figure 7 illustre les principales étapes d'un procédé d'affichage d'élément / niveau central selon un mode de réalisation de l'invention.

L'invention sera décrite ci-après plus particulièrement dans son application dans un système de mission, comportant un terminal d'affichage apte à afficher des éléments d'une base de données relationnelle à n niveaux de hiérarchie.

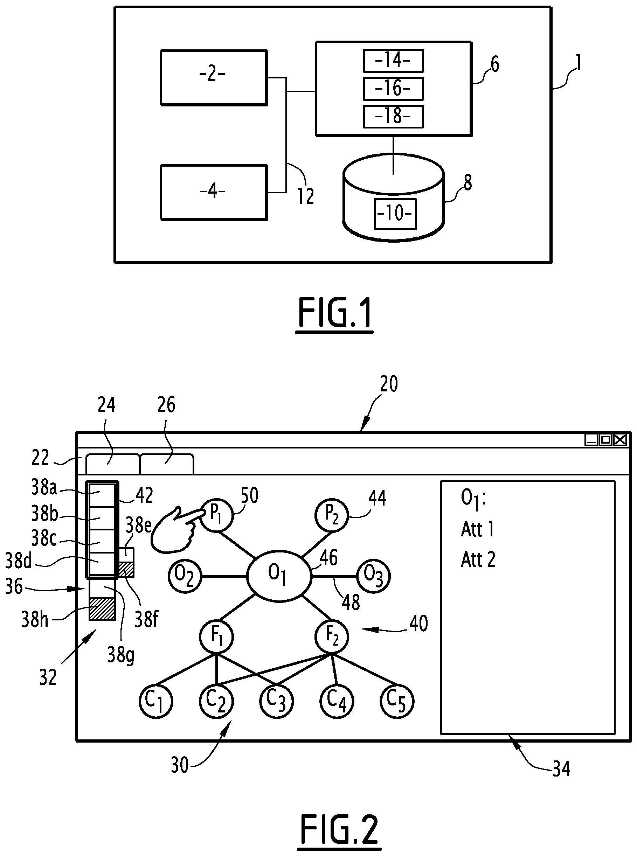

La figure 1 illustre schématiquement les blocs fonctionnels d'un terminal d'affichage 1 selon un mode de réalisation de l'invention.

Le terminal d'affichage 1 comprend un écran d'affichage 2, de préférence tactile, un module 4 de saisie des commandes d'un opérateur, qui est par exemple un module de saisie de commandes tactiles, permettant de sélectionner des éléments graphiques affichés sur une interface graphique de l'écran 2, une unité centrale de traitement 6, ou CPU, apte à exécuter des instructions de programme informatique lorsque le terminal d'affichage 1 est mis sous tension.

L'unité centrale de traitement 6 est en communication avec des moyens de stockage d'informations 8, par exemple des registres, aptes à stocker des instructions de code exécutable et des valeurs de paramètres pour la mise en oeuvre de programmes comportant des instructions de code aptes à mettre en oeuvre le procédé de l'invention.

Une base de données relationnelle 10 à n niveaux de hiérarchie, dont certains éléments sont également reliés par au moins une relation d'association d'un autre type que la relation hiérarchique est mémorisée dans les moyens de stockage d'informations 8.

Les divers blocs fonctionnels du terminal d'affichage 1 décrits ci-dessus sont connectés via un bus de communication 12.

L'unité centrale de traitement 6 met en oeuvre un module de filtrage de niveaux 14, un module de ré-agencement d'affichage 16 et un module de sélection 18 apte à mettre en oeuvre des moyens de sélection d'un niveau central d'affichage et /ou d'un élément central d'affichage.

La figure 2 illustre schématiquement une interface graphique 20 d'un écran d'affichage 2 d'un terminal d'opérateur 1 selon un mode de réalisation de l'invention.

L'interface graphique 20 de la figure 2 est dans un premier état d'affichage.

Une fenêtre d'affichage 22 est représentée, comportant plusieurs onglets sélectionnables 24, 26, chaque onglet sélectionnable correspondant à une vue d'affichage de la base de données relationnelle 10 à afficher.

Dans l'exemple de la figure 2, l'onglet 24 est sélectionné, pour un affichage selon un mode d'affichage sous forme de graphe des éléments de la base de données relationnelle.

La fenêtre 22 comporte, dans le mode de réalisation de la figure 2, trois parties, notées respectivement 30, 32, 34. La première partie 30 est destinée à afficher une représentation par niveaux de hiérarchie des éléments de la base de données. La deuxième partie 32 est destinée à afficher un objet graphique d'interaction 36, présentant n=8 zones d'activation/désactivation d'affichage sélectionnables, référencées 38a à 38h.

Dans l'exemple de la figure 2, un graphe hiérarchique 40 est affiché dans la première partie 30 de la fenêtre d'affichage 22, ce graphe hiérarchique 40 représentant quatre niveaux de hiérarchie parmi les huit niveaux de hiérarchie de la base de données 10.

L'objet graphique d'interaction 36 comporte un indicateur de niveaux 42, qui est un encadrement rectangulaire en trait épais d'un ensemble de zones d'activation/désactivation 38a à 38h dans l'exemple de la figure, permettant de représenter visuellement les niveaux de hiérarchie affichés effectivement, suite à une sélection de l'opérateur. Chaque niveau de hiérarchie a une zone d'activation/désactivation d'affichage associée. Dans l'exemple de la figure 2, la zone 38a correspond au niveau 1 de hiérarchie de la base de données 10, la zone 38b correspond au niveau 2 de hiérarchie, la zone 38 c correspond au niveau 3 de hiérarchie et ainsi de suite.

Selon un mode de réalisation, un niveau de hiérarchie correspondant est directement affiché dans les zones d'activation/désactivation 38a à 38h.

En variante, d'autres types d'indications de correspondance sont affichés, par exemple une correspondance couleur entre les niveaux de hiérarchie et les zones d'activation/désactivation d'affichage 38a à 38h, par exemple par une annotation textuelle.

Il est à noter que le nombre total de niveaux de hiérarchie de la base de données est n=8, donc l'objet graphique d'interaction comprend huit zones d'activation/désactivation.

De plus, le niveau 4 comporte deux sous-niveaux, sous-niveau 5 et sous-niveau 6. Un niveau de hiérarchie correspond à un type d'éléments, et un sous-niveau comprend un sous-type d'éléments du type d'éléments du niveau parent. Par exemple, lorsque le niveau 4 correspond à un type « véhicule », les deux sous-niveaux 5 et 6 correspondent respectivement à « véhicule 2 roues » et « véhicule 4 roues ».

Par exemple, dans le cadre d'un système de mission, les éléments d'un niveau de hiérarchie de la base de données représentent un système d'armes de bateau constitué de radars et de senseurs optiques, les trois sous-niveaux considérés étant les armes, les senseurs actifs et les senseurs passifs.

Par la suite, pour simplifier l'explication, on parle simplement de niveaux de hiérarchie, chaque niveau étant associé à une zone d'activation/désactivation de l'objet graphique d'interaction 36.

Les zones d'activation ont un état d'affichage « activé » ou « désactivé » courant, correspondant au graphe hiérarchique 40 affiché dans l'état d'affichage courant.

Les zones d'activation/désactivation correspondant aux niveaux 6 et 8 ont un indicateur visuel associé, par exemple représenté en hachuré, indiquant un état de désactivation. Tous les éléments des niveaux de hiérarchie associés aux niveaux désactivés sont filtrés, et donc non représentés, dans le graphe hiérarchique 40.

Le graphe hiérarchique 40 comporte des éléments ou objets 44, représentés autour d'un élément central d'affichage 46, ou élément central, sélectionné par l'opérateur. L'élément central dans cet exemple est labélisé O₁. Un indicateur visuel est utilisé pour indiquer l'élément central affiché. Dans le mode de réalisation illustré à la figure 2, l'élément 46 est plus gros que les autres éléments représentés. En variante, la forme de l'icône graphique représentant l'élément central est choisie différente de la forme des icônes graphiques représentant les autres éléments, la différence étant une différence de forme géométrique ou une différence indiquée par un marquage supplémentaire. D'une manière générale, tout moyen d'indication visuelle permettant de distinguer facilement l'élément central peut être utilisé.

Les deux autres éléments, labélisés O₂ et O₃, du même niveau de hiérarchie, sont liés à l'élément central 46. L'association est représentée par des liens 48.

En outre, des attributs de l'élément central 46 sont affichés dans la troisième partie 34 de la fenêtre d'affichage 22.

L'élément central 46 fait partie du niveau 2 de hiérarchie, qui est le niveau central d'affichage. L'indicateur de niveaux 42 est positionné par rapport au niveau central d'affichage. Par exemple, dans la figure 2, quatre niveaux sont affichés, positionnés par rapport au niveau 2. On utilise l'expression *N<numéro de niveau*>(-<*valeur au-dessus*>,+<*valeur en-dessous*>) pour coder le positionnement de l'indicateur de niveaux 42.

Ainsi, dans l'exemple de la figure 2, l'indicateur de niveaux 42 peut être codé par : N2(-1,+2).

Le niveau central d'affichage ne peut pas être désactivé par la zone 38b d'activation/désactivation d'affichage correspondante.

Par conséquent, lorsqu'un niveau est affiché en tant que niveau central, la zone d'activation/désactivation correspondante est figée dans un état « activé » et ne peut pas être commandée par l'opérateur.

Dans un mode de réalisation, la zone d'activation/désactivation de l'objet graphique d'interaction comporte une indication visuelle permettant d'indiquer à l'opérateur qu'elle est associée au niveau central d'affichage, par exemple par une indication couleur ou par une texture de remplissage particulière.

Ainsi, au moins un niveau du graphe hiérarchique 40 est affiché, c'est le niveau central qui ne peut pas être désactivé. Un ou plusieurs niveaux autour de ce niveau central, soit situés au-dessus, soit en-dessous, soit les deux, comme dans l'exemple de la figure 2, sont affichés. Les niveaux de hiérarchie situés au-dessus du niveau central sont appelés niveaux parents, et les niveaux de hiérarchie situés en dessous sont appelés niveaux enfants. Comme illustré sur la figure 2, un élément d'un niveau de hiérarchie peut avoir plusieurs éléments parents dans le niveau directement au-dessus, comme par exemple les éléments C₂ et C₃.

Un opérateur peut agir directement sur l'indicateur de niveaux 42, par une commande prédéterminée comme par exemple un mouvement de translation en maintenant un doigt appuyé sur un point de cet indicateur 42, afin de commander une augmentation ou une diminution du nombre de niveaux affichés dans le graphe hiérarchique 40.

Par exemple, si à partir de l'exemple de la figure 2, un opérateur étend l'indicateur 42 de manière à englober les niveaux 5 et 6, la commande actionne le module de ré-agencement d'affichage 16 qui inclut dans l'affichage les éléments du niveau 5 sélectionné qui est à l'état « activé », en rapport avec l'élément central d'affichage courant.

Selon un premier mode de réalisation, le niveau 6, qui est en état « désactivé » selon la zone d'activation/désactivation 38f correspondante est affiché en hachuré.

Selon un deuxième mode de réalisation, une commande d'un opérateur sélectionnant des niveaux de hiérarchie supplémentaires à afficher induit automatiquement, par mise en oeuvre du module de filtrage 14 et du module de ré-agencement 16, une activation de tous les niveaux sélectionnés, leur affichage et une mise à jour des zones d'activation/désactivation 38 correspondantes.

Lorsque l'écran d'affichage 2 est un écran tactile l'opérateur peut, par un simple clic d'un doigt, sélectionner un autre élément comme élément central.

En variante, si l'écran n'est pas tactile, un moyen de pointage est utilisé pour sélectionner un autre élément central d'affichage.

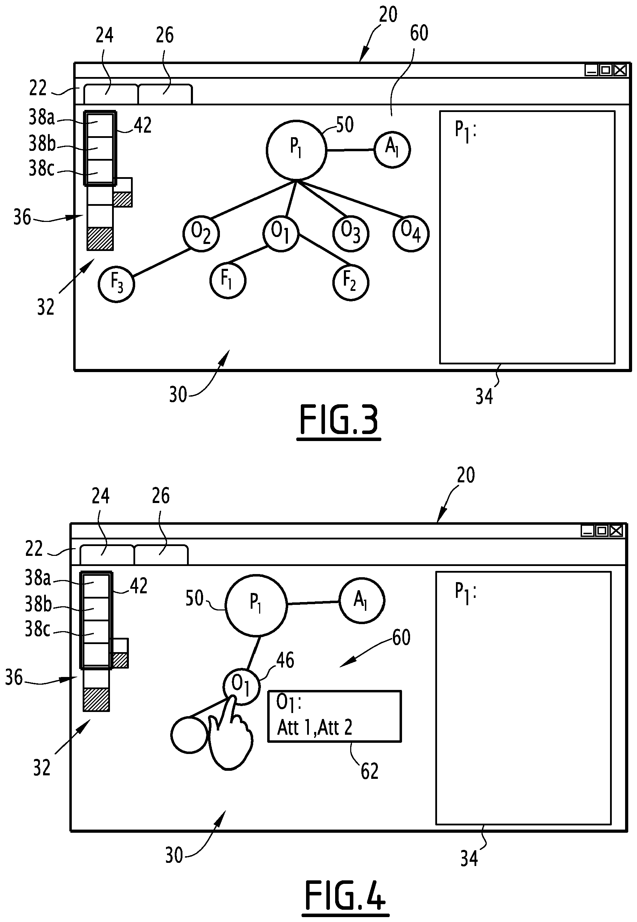

Par exemple, si l'opérateur sélectionne l'élément 50, labélisé P₁, le module de ré-agencement 16 de l'affichage graphique est mis en oeuvre. L'élément P₁ devient l'élément central, donc l'icône le représentant est modifiée, par exemple grossie, comme illustré à la figure 3, alors que l'icône graphique représentant le précédent élément central, qui est l'élément 46 dans l'exemple de la figure 2, est remise à une taille ou forme nominale.

En outre, le module de ré-agencement d'affichage 16 effectue un re-centrage automatique de l'indicateur de niveaux 42 par rapport au niveau central associé à l'élément central. Ainsi, l'indicateur de niveaux 42 passe de N2(-1,+2) à N1(-1,+2). Cependant, comme le niveau 1 est le premier niveau et n'a pas de niveau père, de fait, l'indicateur de niveaux 42 passe à N1(-0,+2). Ainsi, le nombre de niveaux de hiérarchie affiché passe automatiquement de quatre niveaux à trois niveaux, comme illustré à la figure 3.

Ainsi, une représentation 60 d'un graphe hiérarchique comportant trois niveaux de hiérarchie, correspondant à un nouvel état d'affichage, est obtenue.

La troisième partie d'affichage 34 est rafraîchie en conséquence avec les attributs associés à l'élément central 50.

De plus, un graphe hiérarchique 60 centré sur l'élément central 50 est affiché. Le graphe hiérarchique 60 est une évolution du graphe hiérarchique 40 suite à la commande opérateur de sélection de l'élément 50 comme élément central. De plus, d'autres éléments, comme par exemple l'élément fils F₃ de l'élément O₂, apparaissent sur le graphe hiérarchique 60.

Comme illustré à la figure 4, lorsque l'opérateur sélectionne un élément 46 autre que l'élément central 50 comme élément d'intérêt, la sélection s'effectuant par une commande différente de la sélection d'un nouvel élément central, le module de filtrage 14 en coopération avec le module de ré-agencement 16 permettent la mise en avant de la branche du graphe hiérarchique reliant l'élément d'intérêt 46 sélectionné, les autres branches de la représentation graphique 60 étant omises. De plus, les attributs de l'élément d'intérêt 46 sélectionné s'affichent dans une fenêtre 62, positionnée à proximité de l'élément d'intérêt 46 sélectionné.

En outre, l'opérateur peut actionner, par commande tactile ou par tout autre moyen de commande disponible, les zones 38 d'activation/désactivation d'affichage. Par exemple une commande tactile d'appui prolongé sur une zone d'activation/désactivation est prévue pour un changement d'état d'activation/désactivation et pour mise en oeuvre du module de filtrage 14 et du module de ré-agencement d'affichage 16.

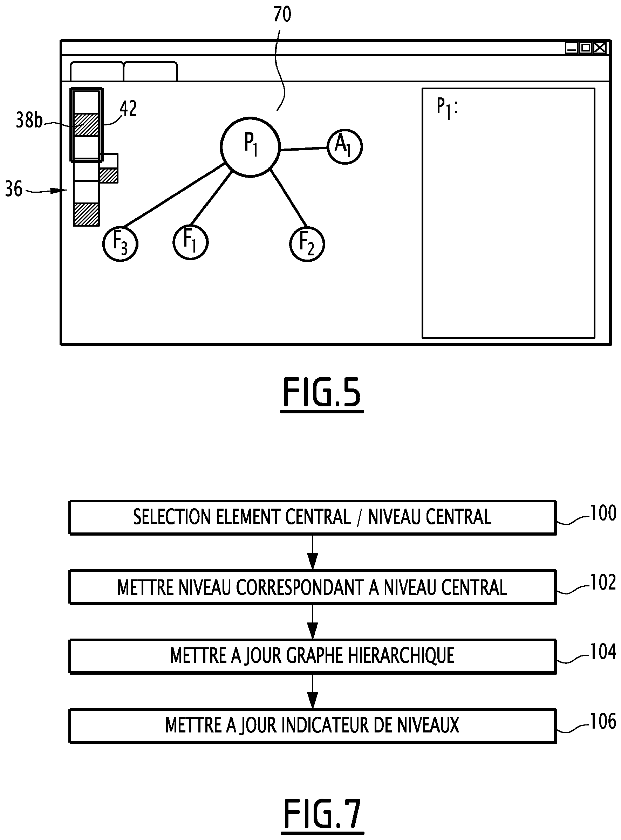

Par exemple, lorsque l'opérateur sélectionne la zone d'activation/désactivation 38b correspondant au niveau 2 de hiérarchie, le module de filtrage 14, en coopération avec le module de ré-agencement 16, mettent en oeuvre un filtrage de tous les éléments du niveau de hiérarchie 2 et effectuent un affichage d'une représentation 70 du graphe hiérarchique, illustrée à la figure 5, à deux niveaux seulement, dans lequel les éléments du niveau 1 sont directement reliés aux éléments du niveau 3. Le module de filtrage 14 calcule les liens entre niveau 1 et niveau 3, de manière à les afficher.

En outre, un indicateur visuel correspondant est affiché sur l'objet graphique d'interaction 36, au niveau de la zone d'activation/désactivation 38b correspondante. Dans le mode de réalisation illustré, la zone 38b est hachurée pour indiquer sa désactivation.

Dans l'exemple de la figure 5, les éléments F₁, F₂, F₃ sont tous liés à l'élément père P₁. Il s'agit d'un exemple simplifié, étant entendu que dans des exemples complexes, plusieurs liens de parenté entre divers éléments sont déterminés pour l'affichage.

Si l'opérateur active à nouveau la zone 38b d'activation/désactivation d'affichage, donc si l'affichage est ré-activé, les éléments O₁, O₂, O₃ sont à nouveau affichés avec les liens respectifs, donc la représentation 60 du graphe hiérarchique, illustrée à la figure 3, est ré-affichée.

De plus, l'objet graphique d'interaction 36 est modifié, la zone d'activation/désactivation 38b étant modifiée pour afficher un état « activé » de l'affichage du niveau 2 correspondant.

Ainsi, avantageusement, l'opérateur a la possibilité, via l'objet graphique d'interaction 36, de contrôler dynamiquement la profondeur d'affichage et le centrage de l'affichage sur un élément central sélectionné.

Avantageusement, la représentation hiérarchique d'affichage est mise à jour dynamiquement, sans intervention de l'opérateur, lorsque l'opérateur sélectionne un autre niveau de hiérarchie comme niveau central d'affichage.

Avantageusement, l'opérateur peut choisir de focaliser sur certains niveaux d'information en sélectionnant une désactivation d'affichage d'un ou plusieurs niveaux de hiérarchie.

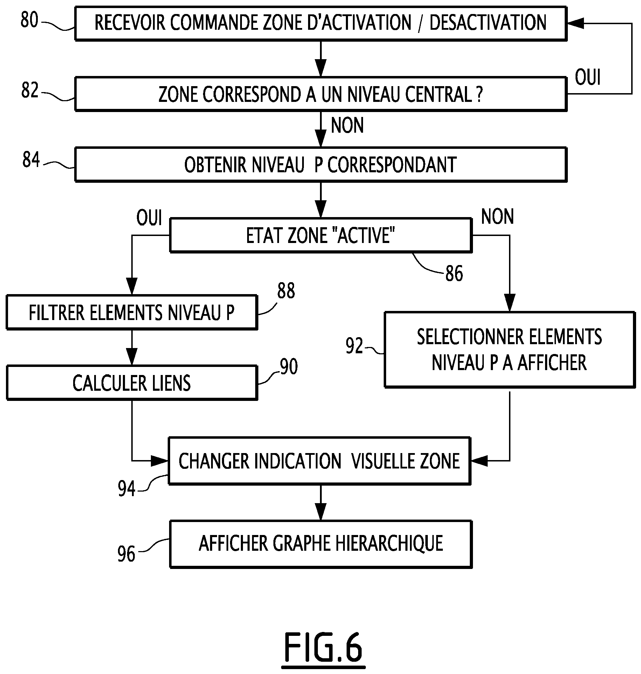

La figure 6 illustre les principales étapes d'un procédé d'affichage d'éléments d'une base de données hiérarchisées à n niveaux selon un mode de réalisation de l'invention, mis en oeuvre par l'unité centrale de traitement 6 d'un terminal 1.

Le procédé est mis en oeuvre suite à un affichage initial dans une fenêtre d'affichage d'éléments d'une base de données selon plusieurs niveaux de hiérarchie, et d'un objet graphique d'interaction tel que décrit ci-dessus associé.

Lors d'une étape initiale, le procédé est en attente 80 d'une nouvelle commande d'activation/désactivation d'un opérateur, via l'objet graphique d'interaction affiché.

Lorsqu'une telle commande est reçue, le procédé vérifie à l'étape 82 si la zone commandée par l'opérateur correspond au niveau central d'affichage de l'état d'affichage courant.

Si tel est le cas, l'étape 82 est suivie de l'étape 80 précédemment décrite d'attente d'une commande opérateur. En effet, il n'y a aucune modification d'affichage suite à une commande concernant le niveau central, dont l'état d'affichage est bloqué à « activé » et ne peut être changé, comme déjà décrit ci-dessus.

Sinon, l'étape 82 est suivie d'une étape 84 d'obtention du niveau de hiérarchie p correspondant à la zone sélectionnée.

Comme expliqué ci-dessus, chaque zone d'activation/désactivation est associée à un niveau de hiérarchie de la base de données à afficher.

Ensuite, il est vérifié à l'étape suivante 86 si la zone sélectionnée a un état d'affichage correspondant « activé ».

En cas de réponse positive à l'étape de vérification 86, le niveau de hiérarchie p est filtré lors d'une étape de filtrage 88, donc les éléments du niveau de hiérarchie p sont masqués. Des liens entre le niveau parent du niveau p affiché et le niveau enfant du niveau p précédemment affiché sont calculés lors d'une étape de calcul de liens 90.

En cas de réponse négative à l'étape de vérification 86, cette étape est suivie d'une étape 92 de sélection des éléments du niveau de hiérarchie p à afficher, en rapport avec l'élément central affiché dans l'état d'affichage courant.

Les étapes 90 et 92 sont suivies d'une étape 94 de changement de l'indication visuelle associée à la zone d'activation/désactivation sélectionnée par l'opérateur, pour indiquer le changement d'état d'affichage associé, son passage d'un état « activé » à un état « désactivé » ou vice-versa.

Ensuite, lors d'une étape d'affichage 96, le graphe hiérarchique modifié en fonction des étapes respectives 88, 90 ou 92 est affiché. Ainsi, un nouvel état d'affichage est atteint, qui devient état d'affichage courant.

L'étape 96 est suivie de l'étape 80 précédemment décrite.

La figure 7 illustre les principales étapes d'un procédé d'affichage d'élément central d'une base de données hiérarchisées à n niveaux selon un mode de réalisation de l'invention, mis en oeuvre par l'unité centrale de traitement 6 d'un terminal 1.

Le procédé est mis en oeuvre suite à un affichage initial dans une fenêtre d'affichage d'éléments d'une base de données selon plusieurs niveaux de hiérarchie, et d'un objet graphique d'interaction tel que décrit ci-dessus associé.

Lors d'une première étape 100, une commande de sélection d'un élément central du graphe hiérarchique affiché est reçue, ou une commande de sélection d'un nouveau niveau central d'affichage.

Suite à la réception d'une telle commande, le niveau de hiérarchie sélectionné ou le niveau de hiérarchie auquel appartient l'élément central sélectionné est mis au niveau central lors d'une étape de mise à jour 102 du niveau central d'affichage.

Ensuite, une mise à jour 104 du graphe hiérarchique est effectuée. Lors de cette étape, l'affichage est centré sur l'élément central et le niveau central, les niveaux affichés sont décalés vis-à-vis du niveau central. Par exemple, si l'affichage précédent comporte l'affichage de trois niveaux de hiérarchie, un niveau parent du niveau central précédent, le niveau central précédent et un niveau fils du niveau central précédent, alors le même schéma d'affichage est appliqué pour l'affichage du graphe hiérarchique du nouveau niveau central sélectionné.

De plus, le cas échéant, l'icône de représentation de l'élément central sélectionné est mise à jour, ainsi que l'icône de représentation de l'élément central précédent.

En outre, une indication visuelle associée au niveau central sélectionné est mise en place.

L'indicateur de niveaux de l'objet graphique d'interaction est également déplacé par rapport au niveau central sélectionné lors de l'étape suivante 106. Ainsi, une mise à jour complète de l'affichage est effectuée, pour obtenir un graphe hiérarchique centré sur un nouveau niveau central sélectionné et/ou un nouvel élément central sélectionné.

## Revendications

1. Terminal d'affichage d'éléments d'une base de données hiérarchisées à n niveaux, au moins certains des éléments de la base de données appartenant à un même niveau de hiérarchie ayant une relation d'association, le terminal d'affichage faisant partie d'un système de mission et comportant au moins deux parties d'affichage (30, 32, 34), **caractérisé en ce qu'**une première partie (30) est destinée à afficher une représentation par niveaux de hiérarchie des éléments de la base de données et une deuxième partie (32) est destinée à afficher un objet graphique d'interaction (36), présentant n zones (38a-38h) d'activation/désactivation d'affichage, chaque zone (38a-38h) d'activation/désactivation d'affichage correspondant à un niveau de hiérarchie dans la première partie (30) d'affichage, le terminal comportant un module de filtrage (14) de niveaux et un module de ré-agencement (16) d'affichage,
lesdites zones (38a-38h) d'activation/désactivation d'affichage étant accessibles à un opérateur du terminal pour commander les modules de filtrage (14) de niveaux et de ré-agencement (16) d'affichage, de manière à obtenir une représentation d'affichage choisie de la base de données,
le terminal comportant en outre des moyens (18) de sélection d'un niveau central d'affichage, l'affichage du niveau central d'affichage sélectionné ne pouvant pas être désactivé via lesdites zones (38a-38h) d'activation/désactivation.

2. Terminal d'affichage selon la revendication 1, **caractérisé en ce que** l'objet graphique d'interaction comporte un indicateur de niveaux (42) affichés, accessible à l'opérateur pour modifier le nombre de niveaux affichés autour du niveau central d'affichage.

3. Terminal d'affichage selon l'une des revendications 1 ou 2, **caractérisé en ce qu'**il comporte des moyens (18) de sélection d'un élément central d'affichage, et **en ce que** le niveau de hiérarchie auquel appartient l'élément central d'affichage est désigné comme niveau central d'affichage.

4. Terminal d'affichage selon la revendication 3, **caractérisé en ce qu'**il comporte en outre une troisième partie d'affichage (34) apte à afficher des attributs relatifs audit élément central d'affichage.

5. Terminal d'affichage selon l'une quelconque des revendications 1 à 4, **caractérisé en ce que** le module de ré-agencement (16) d'affichage est apte à mettre à jour les éléments affichés et l'affichage de l'objet graphique d'interaction (36) en fonction du niveau central d'affichage sélectionné par l'opérateur.

6. Terminal d'affichage selon l'une quelconque des revendications précédentes, **caractérisé en ce que** les éléments (44, 46, 50) de la base de données sont représentés sous forme de graphe hiérarchique (40, 60, 70), des éléments d'un même niveau de hiérarchie étant représentés sur un même niveau dudit graphe hiérarchique (40, 60, 70), des éléments d'un niveau de hiérarchie courant étant liés à un ou plusieurs éléments du niveau supérieur au niveau courant et à un ou plusieurs éléments du niveau inférieur au niveau courant.

7. Terminal d'affichage selon l'une quelconque des revendications précédentes, **caractérisé en ce qu'**au moins certaines zones (38e, 38f) d'activation/désactivation d'affichage de l'objet graphique d'interaction (36) sont associées à des sous-niveaux de hiérarchie correspondants.

8. Procédé d'affichage d'éléments d'une base de données hiérarchisées à n niveaux, au moins certains des éléments de la base de données appartenant à un même niveau de hiérarchie ayant une relation d'association, mis en oeuvre par un terminal d'affichage faisant partie d'un système de mission et comportant au moins deux parties d'affichage (30, 32, 34), une première partie (30) étant destinée à afficher une représentation par niveaux de hiérarchie des éléments de la base de données et une deuxième partie (32) étant destinée à afficher un objet graphique d'interaction (36), présentant n zones (38a-38h) d'activation/désactivation d'affichage, chaque zone (38a-38h) correspondant à un niveau de hiérarchie dans la première partie (30) d'affichage, **caractérisé en ce qu'**il comporte des étapes de :
- réception (100) d'une commande de sélection d'un niveau central d'affichage,
- réception (80) d'une commande opérateur de sélection d'une zone d'activation/désactivation,
- vérification (82) de l'association de la zone d'activation/désactivation sélectionnée au niveau central d'affichage,
- en cas de vérification négative, obtention (84) d'un niveau de hiérarchie p associé à ladite zone d'activation/désactivation sélectionnée,
- modification (88-96) de la représentation par niveaux de hiérarchie de la base de données par filtrage ou ajout du niveau de hiérarchie p associé à ladite zone d'activation/désactivation sélectionnée,

9. Procédé d'affichage d'éléments d'une base de données selon la revendication 8, **caractérisé en ce qu'**il comporte, après l'étape d'obtention d'un niveau de hiérarchie, les étapes de :
- vérification (86) d'un état d'activation d'affichage associé à ladite zone d'activation/désactivation sélectionnée,
- en cas d'état activé, filtrage (88) des éléments affichés de niveau de hiérarchie p et calcul (90) des liens entre les éléments d'un niveau parent du niveau de hiérarchie p et les éléments d'un niveau enfant du niveau de hiérarchie p,
- en cas d'état désactivé, sélection (92) d'éléments du niveau de hiérarchie p à afficher.

10. Procédé d'affichage d'éléments d'une base de données selon la revendication 9, **caractérisé en ce qu'**il comporte en outre une étape de mise à jour (94) de l'affichage des zones d'activation/désactivation de l'objet graphique d'interaction.

11. Procédé d'affichage d'éléments d'une base de données selon l'une quelconque des revendications 8 à 10, **caractérisé en ce qu'**il comporte en outre des étapes, mises en oeuvre suite à la réception (100) d'une commande de sélection de niveau central d'affichage, de :
- mise à jour (104) de la représentation par niveaux de hiérarchie des éléments de la base de données, et
- mise à jour (106) d'un indicateur de niveaux affichés associé à l'objet graphique d'interaction en fonction du niveau central d'affichage sélectionné.

12. Procédé d'affichage d'éléments d'une base de données selon l'une quelconque des revendications 8 à 10, **caractérisé en ce qu'**il comporte en outre des étapes de :
- réception (100) d'une commande de sélection d'un élément central d'affichage,
- sélection (102) du niveau de hiérarchie auquel appartient l'élément central d'affichage sélectionné en tant que niveau central d'affichage,
- mise à jour (104) de la représentation par niveaux de hiérarchie des éléments de la base de données en fonction du niveau central d'affichage sélectionné, et
- mise à jour (106) d'un indicateur de niveaux affichés associé à l'objet graphique d'interaction en fonction du niveau central d'affichage sélectionné.

## Patentansprüche

1. Terminal zur Anzeige von Elementen einer Datenbank für hierarchisch strukturierte Daten in n-Ebenen, wobei mindestens bestimmte der Elemente der Datenbank, die zu einer selben Hierarchieebene gehören, eine Zuordnungsbeziehung aufweisen, wobei das Anzeigeterminal ein Teil eines Missionssystems ist und mindestens zwei Anzeigebereiche (30, 32, 34) aufweist, **dadurch gekennzeichnet, dass** ein erster Bereich (30) vorgesehen ist, eine Darstellung über Hierarchieebenen der Elemente der Datenbank anzuzeigen, und ein zweiter Bereich (32) vorgesehen ist, ein grafisches Interaktionsobjekt (36), das n-Zonen (38a - 38h) der Aktivierung/Deaktivierung der Anzeige aufweist, anzuzeigen, wobei jede Zone (38a - 38h) der Aktivierung/Deaktivierung der Anzeige eine Hierarchieebene in dem ersten Anzeigebereich (30) entspricht, wobei das Terminal ein Ebenen-Filtermodul (14) und ein Modul zur Umordnung (16) der Anzeige aufweist,
wobei die Zonen (38a - 38h) der Aktivierung/Deaktivierung der Anzeige einer Bedienperson des Terminals zur Steuerung des Ebenen-Filtermoduls (14) und des Moduls (16) zur Umordnung der Anzeige zugänglich ist, um eine Anzeigedarstellung, die aus der Datenbank ausgewählt ist, zu erhalten,
wobei das Terminal außerdem Mittel (18) zum Auswählen einer zentralen Anzeigeebene aufweist, wobei die Anzeige der ausgewählten zentralen Anzeigeebene nicht über die Aktivierungs-/Deaktivierungszonen (38a - 38h) deaktiviert werden kann.

2. Anzeigeterminal nach Anspruch 1, **dadurch gekennzeichnet, dass** das grafische Interaktionsobjekt einen Anzeiger für angezeigte Ebenen (42), der der Bedienperson zugänglich ist, um die Anzahl von angezeigten Ebenen um die zentrale Anzeigeebene herum zu modifizieren, aufweist.

3. Anzeigeterminal nach einem der Ansprüche 1 oder 2, **dadurch gekennzeichnet, dass** es Mittel (18) zum Auswählen eines zentralen Anzeigeelements aufweist und dass die Hierarchieebene, zu der das zentrale Anzeigeelement gehört, als zentrale Anzeigeebene bestimmt ist.

4. Anzeigeterminal nach Anspruch 3, **dadurch gekennzeichnet, dass** es außerdem einen dritten Anzeigebereich (34) aufweist, der geeignet ist, Attribute bezüglich des zentralen Anzeigeelements anzuzeigen.

5. Anzeigeterminal nach einem beliebigen der Ansprüche 1 bis 4, **dadurch gekennzeichnet, dass** das Modul (16) zur Umordnung der Anzeige geeignet ist, die gezeigten Elemente und die Anzeige des grafischen Interaktionsobjekts (36) abhängig von der von der Bedienperson ausgewählten zentralen Anzeigeebene zu aktualisieren.

6. Anzeigeterminal nach einem beliebigen der vorhergehenden Ansprüche, **dadurch gekennzeichnet, dass** die Elemente (44, 46, 50) der Datenbank in Form eines hierarchischen Graphen (40, 60, 70) dargestellt sind, wobei Elemente einer selben Hierarchieebene auf einer selben Ebene des hierarchischen Graphen (40, 60, 70) dargestellt sind, wobei Elemente einer aktuellen Hierarchieebene an ein oder mehrere Elemente des über der aktuellen Ebene liegenden höheren Ebene und an ein oder mehrere Elemente einer zur aktuellen Ebene unteren Ebene gebunden sind.

7. Anzeigeterminal nach einem beliebigen der vorhergehenden Ansprüche, **dadurch gekennzeichnet, dass** mindestens bestimmte Zonen (38e, 38f) der Aktivierung/Deaktivierung der Anzeige des grafischen Interaktionsobjekts (36) entsprechenden Hierarchieunterebenen zugeordnet sind.

8. Verfahren zur Anzeige von Elementen einer Datenbank von hierarchisch strukturierten Daten mit n-Ebenen, wobei mindestens bestimmte der Elemente der Datenbank, die zu einer selben Hierarchieebene gehören, eine Zuordnungsbeziehung aufweisen, ausgeführt von einem Anzeigeterminal, das Teil eines Missionssystems ist und mindestens zwei Anzeigebereiche (30, 32, 34) aufweist, wobei ein erster Bereich (30) dazu dient, eine Darstellung der Elemente der Datenbank in Hierarchieebenen anzuzeigen und ein zweiter Bereich (32) dazu dient, ein grafisches Interaktionsobjekt (36) anzuzeigen, das n-Zonen (38a - 38h) der Aktivierung/Deaktivierung der Anzeige aufweist, wobei jede Zone (38a - 38h) einer Hierarchieebene in dem ersten Anzeigebereich (30) entspricht, **dadurch gekennzeichnet, dass** es die Schritte aufweist:
- Empfangen (100) eines Befehls zur Auswahl einer zentralen Anzeigeebene,
- Empfangen (80) eines Bedienerbefehls zur Auswahl einer Aktivierungs-/Deaktivierungszone,
- Prüfen (82) der Zuordnung der ausgewählten Aktivierungs-/Deaktivierungszone zu der zentralen Anzeigeebene,
- im Fall einer negativen Prüfung, Erlangen (84) einer hierarchischen Ebene p, die der ausgewählten Aktivierungs-/Deaktivierungszone zugeordnet ist,
- Modifizieren (88 - 96) der Darstellung durch Hierarchieebenen der Datenbank durch Filtern oder Hinzufügen einer Hierarchieebene p, die der ausgewählten Aktivierungs-/Deaktivierungszone zugeordnet ist.

9. Verfahren zum Anzeigen von Elementen einer Datenbank nach Anspruch 8, **dadurch gekennzeichnet, dass** es nach dem Schritt des Erlangens einer Hierarchieebene die Schritte aufweist:
- Prüfen (86) eines Anzeigeaktivierungszustands, der der ausgewählten Aktivierung/Deaktivierungszone zugeordnet ist,
- im Fall eines aktivierten Zustands, Filtern (88) von angezeigten Elementen der Hierarchieebene p und Berechnen (90) von Bindungen zwischen den Elementen einer Elternebene der Hierarchieebene p und Elementen einer Kinderebene der Hierarchieebene p,
- im Fall eines deaktivierten Zustands, Auswählen von anzuzeigenden Elementen der Hierarchieebene p.

10. Verfahren zum Anzeigen von Elementen einer Datenbank nach Anspruch 9, **dadurch gekennzeichnet, dass** es außerdem einen Schritt des Aktualisierens (94) der Anzeige de Aktivierungs-/Deaktivierungszonen des grafischen Interaktionsobjekts aufweist.

11. Verfahren zum Anzeigen von Elementen einer Datenbank nach einem beliebigen der Ansprüche 8 bis 10, **dadurch gekennzeichnet, dass** es außerdem Schritte aufweist, die nach dem Empfang (100) eines Befehls zum Auswählen der zentralen Anzeigeebene durchgeführt werden:
- Aktualisieren (104) der Darstellung über Hierarchieniveaus der Elemente der Datenbank, und
- Aktualisieren (106) eines Anzeigers von angezeigten Ebenen, der dem grafischen Interaktionsobjekt zugeordnet ist, abhängig von der ausgewählten zentralen Anzeigeebene.

12. Verfahren zum Anzeigen von Elementen einer Datenbank nach einem beliebigen der Ansprüche 8 bis 10, **dadurch gekennzeichnet, dass** es außerdem Schritte aufweist:
- Empfangen (100) eines Befehls zum Auswählen eines zentralen Anzeigeelements,
- Auswählen (102) der Hierarchieebene, zu der das ausgewählten zentrale Anzeigeelement gehört, als zentrale Anzeigeebene,
- Aktualisieren (104) der Darstellung über Hierarchieniveaus der Elemente der Datenbank, abhängig von der ausgewählten zentralen Anzeigeebene, und
- Aktualisieren (106) eines Anzeigers von angezeigten Ebenen, der dem grafischen Interaktionsobjekt zugeordnet ist, abhängig von der ausgewählten zentralen Anzeigeebene.

## Claims

1. A display terminal for elements of a hierarchical database with n levels, at least some of the elements of the database belonging to a same hierarchical level having an association relationship, the display terminal belonging to a mission system and including at least two display parts (30, 32, 34), **characterized in that** a first part (30) is intended to display a depiction by hierarchical levels of the elements of the database and a second part (32) is intended to display a graphic interaction object (36), having n display activation/deactivation zones (38a-38h), each display activation/deactivation zone (38a-38h) corresponding to a hierarchical level in the first display part (30), the terminal including a level filtering module (14) and a display rearrangement module (16),
said display activation/deactivation zones (38a-38h) being accessible to an operator of the terminal to command the level filtering (14) and display rearrangement (16) modules, so as to obtain a selected display depiction of the database,
the terminal further including means (18) for selecting a central display level, the display of the selected central display level not being able to be deactivated via said activation/deactivation zones (38a-38h).

2. The display terminal according to claim 1, **characterized in that** the graphic interaction object includes a displayed level indicator (42), accessible to the operator to modify the number of levels displayed around the central display level.

3. The display terminal according to one of claims 1 or 2, **characterized in that** it includes means (18) for selecting a central display element, and **in that** the hierarchical level to which the central display element belongs is designated as central display level.

4. The display terminal according to claim 3, **characterized in that** it further includes a third display part (34) able to display attributes relative to said central display element.

5. The display terminal according to any one of claims 1 to 4, **characterized in that** the display rearrangement module (16) is able to update the displayed elements and the display of the graphic interaction object (36) as a function of the central display level selected by the operator.

6. The display terminal according to any one of the preceding claims, **characterized in that** the elements (44, 46, 50) of the database are depicted in hierarchical graph form (40, 60, 70), elements of the same hierarchical level being depicted on a same level of said hierarchical graph (40, 60, 70), elements of a current hierarchical level being connected to one or several elements of the level above the current level and to one or several elements of the level below the current level.

7. The display terminal according to any one of the preceding claims, **characterized in that** at least some display activation/deactivation zones (38e, 38f) of the graphic interaction object (36) are associated with corresponding hierarchical sub-levels.

8. A method for displaying elements of a hierarchical database with n levels, at least some of the elements of the database belonging to a same hierarchical level having an association relationship, implemented by a display terminal belonging to a mission system and including at least two display parts (30, 32, 34), a first part (30) being intended to display a depiction by hierarchical levels of the elements of the database and a second part (32) being intended to display a graphic interaction object (36), having n display activation/deactivation zones, each zone (38a-38h) corresponding to a hierarchical level in the first display part (30), **characterized in that** it includes the following steps:
- receiving (100) a selection command of a central display level,
- receiving (80) an operator selection command of an activation/deactivation zone,
- verifying (82) the association of the selected activation/deactivation zone with the central display level,
- in case of negative verification, obtaining (84) a hierarchical level p associated with said selected activation/deactivation zone,
- modifying (88-96) the depiction by hierarchical levels of the database by filtering or adding the hierarchical level p associated with said selected activation/deactivation zone.

9. The method for displaying elements from a database according to claim 8, **characterized in that** it includes, after the step for obtaining a hierarchical level, the following steps:
- verifying (86) a display activation state associated with said selected activation/deactivation zone,
- in case of activated state, filtering (88) the displayed elements with hierarchical level p and calculating (90) the links between the elements of a parent level of hierarchical level p and the elements of a child level of hierarchical level p,
- in case of deactivated state, selecting (92) elements of the hierarchical level p to be displayed.

10. The method for displaying elements from a database according to claim 9, **characterized in that** it further includes a step for updating (94) the display of the activation/deactivation zones for the graphic interaction object.

11. The method for displaying elements from a database according to any one of claims 8 to 10, **characterized in that** it further includes steps, implemented following the reception (100) of a selection command for the central display level, of:
- updating (104) the depiction by hierarchical levels of the database elements, and
- updating (106) a displayed level indicator associated with the graphic interaction object as a function of the selected central display level.

12. The method for displaying elements from a database according to any one of claims 8 to 10, **characterized in that** it further includes the following steps:
- receiving (100) a selection command for a central display element,
- selecting (102) the hierarchical level to which the central display element selected as central display level belongs,
- updating (104) the depiction by hierarchical levels of the database elements as a function of the selected central display level, and
- updating (106) a displayed level indicator associated with the graphic interaction object as a function of the selected central display level.
